# EUROPÄISCHE PATENTANMELDUNG

(11) **EP 2 650 739 A1**
(43) Veröffentlichungstag der Anmeldung: **16.10.2013**
(21) Anmeldenummer: 13157523.5
(22) Anmeldetag: 04.03.2013
(51) Int. Cl.: G05B 15/02

(54) **Verfahren und Vorrichtung zur Optimierung eines Produktionsprozesses**

(30) Priorität: 13.04.2012 DE 102012206083
(71) Anmelder: Krones AG, 93073 Neutraubling (DE)
(72) Erfinder: Kellhammer, Thomas, 93073 Neutraubling (DE); Keck, Reiner, 93073 Neutraubling (DE); Zölfl, Markus, 93073 Neutraubling (DE); Raith, Stefan, 93073 Neutraubling (DE)
(74) Vertreter: Grünecker, Kinkeldey, Stockmair & Schwanhäusser

(57) **Zusammenfassung**

Verfahren zur Optimierung eines Produktionsprozesses mit mehreren Produktionsschritten, wobei der Prozess mehrere Verbraucher umfasst, zur Produktion eines Produkts in einer Produktionsanlage, insbesondere in einer Getränkefabrik, mit den Schritten (i) zeitabhängiges Erfassen von Energie- und/oder Medienverbrauch für die Verbraucher über einen vordefinierten Referenzzeitraum zur Erstellung von entsprechenden Verbrauchsprofilen jeweils für den Energie- und/oder Medienverbrauch der Verbraucher; (ii) Erstellen eines zeitabhängigen Verbrauchsprofils des Energie- und/oder Medienverbrauchs über den vordefinierten Referenzzeitraum aus den Verbrauchsprofilen aus Schritt (i), insbesondere durch Aufsummieren der Profile; und Optimieren des Verbrauchsprofils aus Schritt (ii) bezüglich jeweils des Energie- und/oder Medienverbrauchs im Hinblick auf eine verringerte Spitzenlast und/oder einen geringeren Verbrauchs.

## Beschreibung

Die Erfindung betrifft ein Verfahren und eine Vorrichtung zur Optimierung eines Produktionsprozesses mit mehreren Produktionsschritten zur Produktion eines Produkts in einer Produktionsanlage, insbesondere in einer Getränkefabrik.

Bereits heute werden in Industriebetrieben verschiedene Energie- und Mediendaten insbesondere im Hinblick auf den Verbrauch aufgenommen, um mögliche Optimierungen der Verbrauchswerte zu erreichen. Dabei gibt es beispielsweise Einzelmessungen an Maschinen. Ebenso können beispielsweise Energie- und/oder Medienverbrauch einer kompletten Produktionsanlage betrachtet werden. Ein Problem dabei ist nicht nur das Optimieren der Verbrauchswerte der Maschinen, etwa im Hinblick auf Arbeitspunkt der Maschinen, sondern auch das Planen von Produktionsabläufen in Anbetracht von sich ändernden technischen und ebenso Marktdaten. Insbesondere bei komplexen, mehrteiligen Anlagen oder Maschinen oder Produktionslinien ist jedoch nicht immer sofort offensichtlich, wie der Energieverbrauch / Medienverbrauch zu optimieren ist, um die Energieeffizienz und damit letztlich die Wirtschaftlichkeit der Anlage zu beeinflussen.

In Produktionsanlagen, insbesondere in einer Getränkefabrik, werden die Planung und die operative Abwicklung einer Produktion häufig nach unterschiedlichen Gesichtspunkten angegangen. Bekannte Kennzahlen, die heran gezogen werden, sind beispielsweise Ausnutzungsgrade der Produktionseinheiten, Lager- bzw. Bestandsgrößen von Bestandseinheiten (stock keeping units SKU), Mindesthaltbarkeitsaspekten und damit verbunden mögliche kleinere Chargen, Umstellhäufigkeit, kontinuierliche Auslastung, Personaleinsatz, Reihenfolge von Produktionsschritten.

Die Planung der Abwicklung von Produktionsanlagen wird in der Getränkeindustrie häufig manuell durchgeführt. Es kann ein Planungswerkzeug zum Einsatz kommen, welches durch Strafffunktionen eine Vielzahl von Produktionsplänen zwecks Straffung vergleicht oder durch künstliche Intelligenz optimiert. Die Basis dieser Optimierung sind Eingabeparameter, die die Strafffunktionen zur Bewertung von möglichen Plänen parametrisieren. Diese Parameter werden entweder als statische Größen in einem Programm hinterlegt oder liegen in der Erfahrung des jeweiligen Planers.

Die Produktionsanlagen selbst sind bei der Planung lediglich durch statische Parameter wie Rüstzeiten, Effizienzen, Lagerbestände etc. beschrieben. In der operativen Ausführung der Produktionsaufträge selbst laufen die Einheiten der Produktionsanlagen unverändert mit Einstellungen unter Nominalbedingungen.

Statische Eingabeparameter und/oder Erfahrungswerte, die als statische Parameter von einem Nutzer einer Anlage eingegeben werden, werden jedoch der zunehmenden Komplexität der auf den Anlagen ablaufenden Produktionsprozesse hinsichtlich von äußeren Einflussfaktoren nicht mehr gerecht. Die Parameter einer Produktionsanlage, wenn als System betrachtet, verändern sich hinsichtlich der äußeren Einflussfaktoren praktisch ständig. Wenn das System nicht transparent ist, d.h. wenn die Abhängigkeiten nicht oder nicht hinreichend bekannt sind, ist eine optimierte Anpassung der Produktion und darauf basierend eine optimierte Planung der Produktion sehr schwierig. Das gilt insbesondere im Hinblick auf die Optimierung des Energieverbrauchs der Produktionsanlage, also des Systems, sowie die Optimierung des Medienverbrauchs, beispielsweise des Wasserverbrauchs des Systems. Damit einher geht eine wirtschaftlich optimierte Planung des Systems.

Im Hinblick auf den Energieverbrauch können die Verbraucher, also die Produzenten, Verträge mit den Versorgern, den Energieversorgungsunternehmen EVU, verhandeln. Diese Verträge können auf der Basis eines Lastprofils verhandelt werden. Der Produktionsalltag kann jedoch Veränderungen des Lastprofils mit sich bringen und damit verbunden sogar Strafzahlungen, weil die Konsequenzen von Entscheidungen in der Produktion hinsichtlich des Energieverbrauchs erst nachträglich bekannt werden. Ähnliche Probleme können hinsichtlich des Medienverbrauchs, beispielsweise Wasserverbrauchs, auftreten. Je größer jedoch Fluktuationen bei den äußeren Parametern auftreten, desto schwieriger wird eine optimierte Planung.

Angesichts der oben skizzierten Probleme ist es Aufgabe der vorliegenden Erfindung, die Energie- und Medieneffizienz von auf Produktionsanlagen ablaufenden Produktionsprozessen zu optimieren und ebenso eine optimierte Planung des Produktionsprozesses vorzusehen.

Diese Aufgabe wird durch ein Verfahren gemäß Patentanspruch 1 und eine entsprechend Vorrichtung gemäß Patentanspruch 9 gelöst.

Die Erfindung schlägt ein Verfahren zur Optimierung eines Produktionsprozesses mit mehreren Produktionsschritten vor, wobei der Prozess mehrere Verbraucher umfasst, zur Produktion eines Produkts in einer Produktionsanlage, insbesondere in einer Getränkefabrik, mit den Schritten:
(i) zeitabhängiges Erfassen von Energie- und/oder Medienverbrauch für die Verbraucher über einen vordefinierten Referenzzeitraum zur Erstellung von entsprechenden Verbrauchsprofilen jeweils für den Energie- und/oder Medienverbrauch der Verbraucher;(ii) Erstellen eines zeitabhängigen Verbrauchsprofils des Energie- und/oder Medienverbrauchs über den vordefinierten Referenzzeitraum aus den Verbrauchsprofilen aus Schritt (i), insbesondere durch Aufsummieren der Profile; und (iii) Optimieren des Verbrauchsprofils aus Schritt (ii) bezüglich jeweils des Energie- und/oder Medienverbrauchs im Hinblick auf eine verringerte Spitzenlast und/oder einen geringeren Verbrauchs.

Beim erfindungsgemäßen Verfahren werden die am Produktionsprozess aktuell beteiligten Verbraucher ermittelt und es werden Verbrauchsprofile für diese Verbraucher erstellt. Beispielsweise können in einer Getränkefabrik Kühleinheiten, Homogenisierungseinheiten, Abfüller, Behälterwaschmaschinen, Etikettiermaschinen, etc. als Verbraucher betrachtet werden. Dabei kann jeweils der Verbrauch an Energie, also Strom und oder der Verbrauch an Medien, beispielsweise Wasser, Fluide, Öl, Schmierfette, Reinigungsmittel etc. betrachtet werden. Diese Verbrauchsprofile können der Betriebssituation der Produktionsanlage, der Prozess- und/oder der Verfahrenseinstellung Rechnung tragen. Beispielsweise sollte ermittelt werden, welche Medienströme, etwa Wasser, Reinigungsmittel, Trocknungsluft erforderlich sind, um eine schnelle Reinigung von Behältern durchführen zu können. Ebenso sollte ermittelt werden, welche Medienströme erforderlich sind, die Reinigung langsam durchzuführen. Jeweils werden dabei vorgegebene, vordefinierte Referenzzeiträume betrachtet. Nachdem die Verbraucher durch die Ermittlung der Verbrauchsprofile beschrieben sind, wobei von Transparenz der Verbraucher gesprochen wird, können Verbrauchsprofile für Energie und/oder Medien unter Verwendung der ermittelten Verbrauchsprofile der Verbraucher erstellt werden, typischerweise durch Aufsummieren über gleich lange Referenzzeiträume und unter Betrachtung der Prozessabfolge. So kann praktisch für jeden Prozessschritt ein wesentlicher oder sogar der gesamte Verbrauch über einen gewählten Referenzzeitraum betrachtet werden. Die Summe der Verbrauchsprofile wird eine unregelmäßige Kurve zeigen, die insbesondere dann, wenn Verbraucher im Wesentlichen zur gleichen Zeit laufen, Spitzenlasten, also Spitzenverbrauch zeigen werden. Dabei ist vor allem der Energieverbrauch maßgeblich, da Energie einen wesentlichen Kostenfaktor darstellt. Eine Optimierung wird die Spitzenlasten verringern und insbesondere einen geringeren Verbrauch pro Referenzzeitraum anstreben.

Dabei kann das Optimieren das Ändern des Ablaufs der Produktionsschritte und/oder das Ändern des zeitlichen Versatzes der Schritte umfassen unter der Bedingung, dass die Produktion des Produkts gewährleistet bleibt.

Es kann also insbesondere die Abfolge von Produktionsschritten im Hinblick auf die Optimierung verändert werden, wobei die Produktion des Produkts und damit ein "korrektes", das Produkt produzierendes Verfahren die Randbedingung bildet. Es versteht sich ebenso, dass ein gewisses Maß an wenigstens teilweise gleichzeitig ausführbaren Schritten möglich sein kann, sofern diese teilweise Gleichzeitigkeit gerade den Verbrauch in einem lastarmen Verbrauchszeitraum senken kann, während der Verbrauch in einem Spitzenlastzeitraum gesenkt werden kann.

Das Optimieren kann ferner den Ausnutzungsgrad der Verbraucher und/oder die Gesamtanlageneffektivität, GAE, berücksichtigen.

Der Ausnutzungsgrad der Verbraucher im Rahmen der Produktion oder Kennzahlen wie die Gesamtanlageneffektivität, GAE, auch englisch Overall Equipment Effectiveness, OEE, genannt, ist als das Produkt der folgenden drei Faktoren definiert: Verfügbarkeitsfaktor, Leistungsfaktor, und Qualitätsfaktor. Ihr Wertebereich liegt zwischen 0 und 1 oder zwischen 0 % und 100 %.

Das Optimieren kann zusätzlich das Abrufen von Energie- und/oder Medienpreisen von einem Energieversorgungsunternehmen, EVU, und/oder einem Medienversorgungsunternehmen, MVU, umfassen; wobei die abgerufenen Energie- und/oder Medienpreise beim Optimieren des Energie- und Medienverbrauchs berücksichtigt werden, um Hochpreisphasen zu vermeiden.

Typischerweise liegt eine Vernetzung mit Energieversorgungsunternehmen und/oder Medienversorgungsunternehmen vor. Der Preis P für die bereitgestellte Energie berechnet sich beispielsweise aus einer gewichteten Summe aus Verbrauch V und Spitzenlast S, P = a V + b S, wobei die Spitzenlast höher gewichtet wird als der Verbrauch, beispielsweise a=0.4 und b=0.6. Somit kann insbesondere beim Optimieren eine höher gewichtete Spitzenlast stärker berücksichtigt werden. Ähnliche gewichtete Summen können auch für den Medienverbrauch, beispielsweise Wasser, betrachtet werden.

In dem Verfahren können die Verbrauchsprofile der Schritte (i) und (ii) zusätzlich in Abhängigkeit der Umgebungstemperatur und/oder des Umgebungsdrucks über den vordefinierten Referenzzeitraum betrachtet werden.

Der Umgebungsdruck und/oder die Umgebungstemperatur können zusätzlich Einfluss auf die Verbrauchsprofile haben. Umwelttechnische Einflüsse können bestimmte Verbraucher oder Prozessschritte begünstigen und andere negativ beeinflussen. Damit kann können auch diese Parameter variabel in die Optimierung eingehen.

Das Verfahren kann weiterhin die folgenden Schritte umfassen: (iv) Erstellen einer Prognose bezüglich des Energie- und/oder Medienbedarfs auf der Basis des optimierten Produktionsprozesses; (v) Übermitteln der Prognose bezüglich des Energie- und/oder Medienbedarfs an die EVU und/oder MVU; und (vi) Abrufen von aktualisierten Energie- und/oder Medienpreisen von dem EVU, und/oder dem MVU und erneutes Optimieren des Verbrauchsprofils unter Berücksichtigung der aktualisierten Energie- und/oder Medienpreise im Hinblick auf eine verringerte Spitzenlast und/oder einen geringeren Verbrauchs und im Hinblick auf eine Vermeidung von Hochpreisphasen.

Die EVU-Unternehmen kaufen typischerweise Strom an einer Strombörse nach Tages- und Stundensätzen, wobei diese Tarife sich sehr dynamisch verändern können. Eine an das EVU zeitnah übermittelte Prognose des Energiebedarfs, beispielsweise für die folgenden Tage, ist dabei im Hinblick auf den Einkauf des EVU hilfreich und ist damit rückbezüglich sehr effizient. Somit könnten Überkapazitäten reduziert werden respektive der Kauf von Überkapazitäten könnte minimiert werden.

Das Verfahren kann weiterhin das Bereitstellen der Funktionen für die Prognoseberechnung an die EVU und/oder die MVU umfassend.

Hierdurch wird die Funktion zur Berechnung der Verbrauchsprognose transparent für das EVU-Unternehmen, so dass ein beidseitiger Vorteil entsteht. In einem dynamischen Tarifmodell kann bei einem steigenden Stromverbrauch zwar der Strompreis in der Summe steigen, jedoch die Spitzenlast sinken, indem der Bedarf beispielsweise nicht mehr in Bezug auf Spitzenstrom (oder Spitzenlast), sondern beispielsweise in Bezug auf die zu produzierende Einheit angegeben wird und dann auch bezogen wird. Dadurch stellt das EVU lediglich eine Strommenge zur Verfügung, wie von der Industrie gefordert, entsprechend der Planung und der Prognose. Überkapazitäten durch schlechte Prognosen müssen dadurch nicht zwangläufig vernichtet werden. Insbesondere kann der CO₂-Ausstoß reduziert werden. Darüber hinaus kann es sowohl für en Produzenten als auch für die EVU oder MVU vorteilhaft sein, ihren CO₂-Ausstoß zu senken, da dieser unter Umständen zusätzlich als Kostenfaktor verrechnet werden muss. Für die Industrie, insbesondere für den Getränkehersteller ergeben sich die Vorteile, dass Einschränkungen in Bezug auf Spitzenlast-Zeiten reduziert oder gar vermieden werden können, da die Prognose und die Verrechnung nach einem dynamischen Prinzip laufen kann. Beispielsweise kann ein Produkt, etwa eine Anzahl produzierter Flaschen in einen mit dem EVU verhandelten Tarifwert im Rahmen eines dynamischen Tarifmodells umgesetzt werden. Bei steigender Anzahl der Menge kann der Tarifwert, also Strom pro Einheit entsprechend beispielsweise Flaschen pro Stunde, sich tatsächlich noch günstiger gestalten. Der Produzent kann sich somit in einer Komfortzone bewegen, in der Überschreitungen der Spitzenwerte nicht notwendigerweise eine Erhöhung der Stromtarife zur Folge haben muss. Es versteht sich, dass diese Überlegungen auch auf den Medienverbrauch übertragbar sind. Das Tarifmodell kann also dynamisch gestaltet werden und im Rahmen des Tarifmodells können also durch die bestehende Datentransparenz und durch kontinuierliche oder zumindest häufig vorgenommene Optimierungen und Planungen das Modell zugunsten des Betreibers beeinflussen.

Die Erfindung umfasst ferner ein Computerprogrammprodukt, umfassend wenigstens ein computerlesbares Medium mit durch einen Computer ausführbaren Anweisungen zum Durchführen der Schritte des Verfahrens wie oben beschrieben beim Betrieb auf einem Computer.

Die Erfindung stellt weiterhin eine Vorrichtung bereit zur Berechnung der Optimierung eines Produktionsprozesses mit mehreren Produktionsschritten, wobei der Prozess mehrere Verbraucher umfasst, zur Produktion eines Produkts in einer Produktionsanlage, insbesondere in einer Getränkefabrik: umfassend (i) Mittel zum zeitabhängigen Erfassen von Energie- und/oder Medienverbrauch für die Verbraucher über einen vordefinierten Referenzzeitraum zur Erstellung von entsprechenden Verbrauchsprofilen jeweils für den Energie- und/oder Medienverbrauch der Verbraucher; (ii) Mittel zum Erstellen eines zeitabhängigen Verbrauchsprofils des Energie - und/oder Medienverbrauchs über den vordefinierten Referenzzeitraum aus den Verbrauchsprofilen aus Schritt (i), insbesondere durch Aufsummieren der Profile; und (iii) eine Steuereinheit zum Optimieren des Verbrauchsprofils aus Schritt (ii) bezüglich jeweils des Energie- und/oder Medienverbrauchs im Hinblick auf eine verringerte Spitzenlast und/oder einen geringeren Verbrauchs.

Die Vorteile der Vorrichtung wurden bereits in Bezug auf das entsprechende Verfahren diskutiert. Die Mittel zum zeitabhängigen Erfassen können geeignete elektronische Mittel, Steuereinheiten, Computer sein, die mit den Verbrauchern oder Gruppen von Verbrauchern verbunden sind. Ferner können Computer oder Steuereinheiten auch in geeigneter Weise drahtlos mit den Verbrauchern verbunden sein. Das Erfassen der Verbrauchsprofile kann automatisch oder halbautomatisch erfolgen, d.h. durch einen Nutzer der Produktionsanlage gesteuert. Es versteht sich, dass ferner die Computer oder Steuereinheiten mit geeigneten Datenbanken verknüpft sind. Die Verbrauchsprofile können dort geeignet gespeichert und wieder abgerufen werden, so dass insbesondere die Profile praktisch jederzeit verglichen werden können, ergänzt werden können oder modifiziert werden können.

In der Vorrichtung kann das Optimieren das Ändern des Ablaufs der Produktionsschritte und/oder das Ändern des zeitlichen Versatzes der Schritte umfassen, unter der Bedingung, dass die Produktion des Produkts gewährleistet bleibt.

In der Vorrichtung kann das Optimieren den Ausnutzungsgrad der Verbraucher und/oder die Gesamtanlageneffektivität, GAE, berücksichtigen:

In der Vorrichtung kann die Steuereinheit mit einem Energieversorgungsunternehmen, EVU, und/oder einem Medienversorgungsunternehmen, MVU, vernetzt sein, wobei die Steuereinheit ausgebildet sein kann, Energie- und/oder Medienpreisen von dem EVU und/oder MVU abzurufen; und wobei die abgerufenen Energie- und/oder Medienpreise beim Optimieren des Energie - und Medienverbrauchs berücksichtigt werden, um Hochpreisphasen zu vermeiden.

Die Verbraucher können untereinander vernetzt sein. Ebenso kann die Produktionsanlage geeignet mit dem EVU und/oder MVU vernetzt sein, so dass Informationen mit dem EVU oder MVU in sehr kurzer Zeit über das Datennetz ausgetauscht werden können.

In der Vorrichtung können die Verbrauchsprofile der Schritte (i) und (ii) zusätzlich in Abhängigkeit der Umgebungstemperatur und/oder des Umgebungsdrucks über den vordefinierten Referenzzeitraum betrachtet werden.

In der Vorrichtung kann die Steuereinheit weiterhin ausgebildet sein: (iv) eine Prognose für einen vordefinierten Zeitraum bezüglich des Energie- und/oder Medienbedarfs auf der Basis des optimierten Produktionsprozesses zu erstellen; (v) die Prognose bezüglich des Energie - und/oder Medienbedarfs an die EVU und/oder MVU zu übermitteln; und (vi) aktualisierte Energie- und/oder Medienpreise vom EVU, und/oder vom MVU abzurufen und zum erneuten Optimieren des Verbrauchsprofils zu verwenden unter Berücksichtigung der aktualisierten Energie - und/oder Medienpreise im Hinblick auf eine verringerte Spitzenlast und/oder einen geringeren Verbrauchs und im Hinblick auf eine Vermeidung von Hochpreisphasen.

Die Steuereinheit kann ferner ausgebildet sein, die Funktionen für die Prognoseberechnung an die EVU und/oder die MVU bereitzustellen.

Es gilt also, dass die Transparenz von Verbrauchern und damit Produktionsschritten, d.h. die Profilierung des Systems den statischen Ansatz der Formulierung von Randbedingungen bei der Produktion ersetzt. Die bei der Profilierung erzielte Transparenz kann in die Optimierung des Produktionsprozesses und darauf aufbauend zur Erstellung hochwertiger Prognosen im Hinblick auf Verfahrensanpassungen eingesetzt werden. Die Vorteile liegen in der Energieeinsparung oder Medieneinsparung, einem verringerten CO₂-Ausstoß oder anderen verringerten Emissionen im Rahmen der Produktion, was letztlich auch zu einem wirtschaftlicheren Gesamtergebnis führen kann.

Der Erfindungsgegenstand wird anhand der nachfolgenden Zeichnungen beispielhaft erläutert.

Es zeigen:
- Figur 1:: Ein schematischer Ablauf eines Produktionsprozesses in Abhängigkeit von der Zeit.
- Figur 2A:: Eine schematische Darstellung eines Verbrauchsprofils bezüglich des Stromverbrauchs eines Verbrauchers/Produktionsschritts A.
- Figur 2B:: Eine schematische Darstellung eines Verbrauchsprofils bezüglich des Stromverbrauchs eines Verbrauchers/Produktionsschritts B.
- Figur 3:: Eine schematische Darstellung des resultierenden Stromverbrauchs der Schritte A und B aus Figuren 2A und 2B.
- Figur 4:: Eine schematische Darstellung einer möglichen Optimierung des Stromverbrauchs A und B aus Figuren 2A und 2B.
- Figur 5:: Ein Verfahren zur Optimierung eines Produktionsprozesses gemäß der vorliegenden Erfindung.

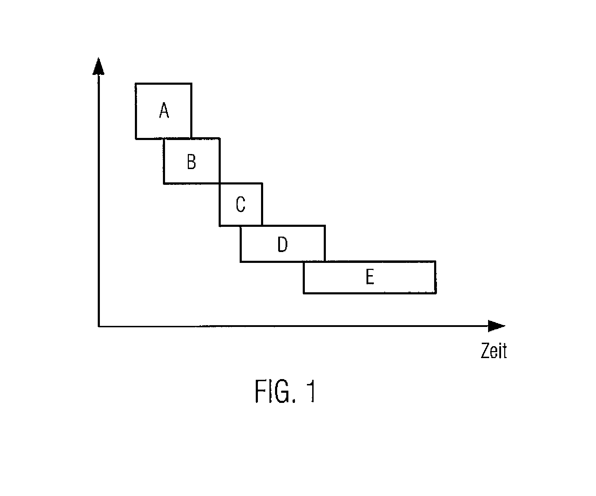

Die Figur 1 zeigt einen schematischen Ablauf eines Produktionsprozesses in Abhängigkeit von der Zeit. Die Produktionsschritte A - E können jeweils ein oder mehrere Verbraucher umfassen. Der Einfachheit halber wird angenommen, dass jeder Produktionsschritt einem Verbraucher zuzuordnen ist. Die Abfolge und der angedeutete zeitliche Überlapp der Produktionsschritte ist dabei hypothetisch zu verstehen. Es ist ebenso denkbar, dass einige der Schritte A - E einen starken zeitlichen Überlapp haben oder sogar gleichzeitig ablaufen. Ebenso ist die Dauer der Schritte A - E als variabel zu verstehen. In dem vorliegenden Fall soll angenommen werden, dass nach dem Schritt E ein Produkt oder wenigstens ein Teilprodukt vorliegt.

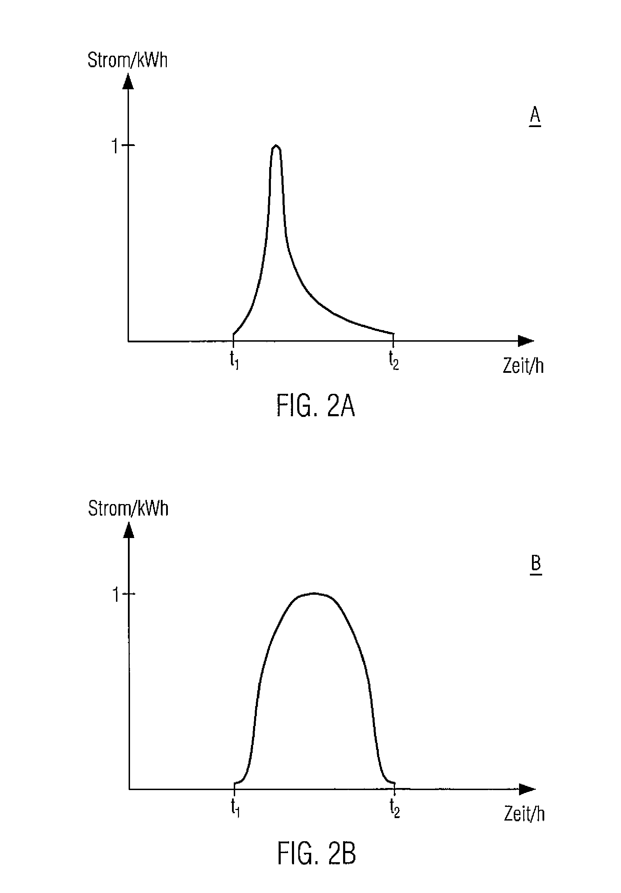

Im Folgenden werden zwei Schritte, die Schritte A und B, aus der Figur 1 beispielhaft heraus genommen und betrachtet. In der Figur 2A ist ein fiktiver Stromverbrauch über einen Messzeitraum Δt = t₂ - t₁ angenommen. Der Stromverbrauch, der an der Ordinate nur in Kurzform mit "Strom" bezeichnet ist, soll beispielsweise in kWh gemessen werden. Es wäre ebenso möglich einen normierten Stromverbrauch anzugeben. Es versteht sich, dass entsprechende Betrachtungen ebenfalls für den Medienverbrauch, beispielsweise für den Wasserverbrauch, angestellt werden können.

Figur 2B zeigt einen weiteren, fiktiven Stromverbrauch für den Prozessschritt und damit für den Verbraucher B aus Figur 1. Der Stromverbrauch ist erneut, wie in Figur 2A, in kWh angegeben. Erneut wird der Stromverbrauch über einen Messzeitraum Δt = t₂ - t₁ betrachtet. Dabei soll zum Zwecke der Vergleichbarkeit der betrachtete Zeitraum, also der Referenzzeitraum, Δt, in den Figuren 2A und 2B gleich gewählt sein. Das Verbrauchsprofil in Figur 2B ist deutlich breiter als das Verbrauchsprofil in Figur 2A.

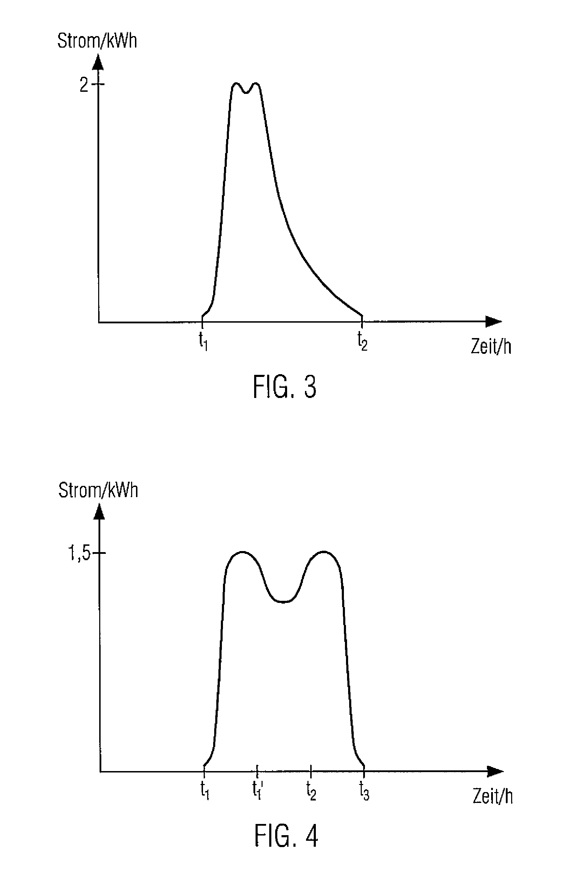

Ein Stromverbrauch, der beide Prozessschritte A und B berücksichtigt, ist in Figur 3 angegeben. Hier ist die Summe der Verbrauchsprofile aus den Figuren 2A und 2B dargestellt, wobei zunächst der hypothetische Fall betrachtet wird, dass beide Prozesse im Wesentlichen gleichzeitig ablaufen sollen. Dabei ergibt sich in der Addition der Verbrauchsprofile in etwa die in Figur 3 dargestellte Kurve, die eine Verdopplung der Spitzenlast, also des Spitzenstromverbrauchs zumindest für einen Teil des Zeitraums Δt andeutet.

Eine mögliche Optimierung des Stromverbrauchs und insbesondere eine Reduzierung der Spitzenlast sind in Figur 4 skizziert. Hier sind die Prozessschritte A und B zeitlich versetzt angedeutet. Die resultierende Spitzenlast ist deutliche niedrigerer als die zum Vergleich dargestellte Spitzenlast in Figur 3. Der Beginn des Prozessschritts B wird hier zu einem Zeitpunkt t₁' angenommen, der später liegt als der Zeitpunkt t₁. Ferner wird das Ende des Prozessschritts B mit dem Zeitpunkt t₃ markiert, der in diesem Beispiel nach dem Zeitpunkt t₂ liegt. Die optimierte Prozessdauer für den Schritt B ist dann gegeben durch Δt' = t₃ - t₁'. Dabei kann Δt' ≥ Δt gelten.

Es soll verstanden sein, dass das obige Beispiel nur eine deutliche Vereinfachung darstellt und ein Produktionsprozess aus vielen Schritten bestehen kann, deren zeitliches Verhältnis zueinander im Rahmen der Erfindung optimiert werden kann.

Beispielsweise kann in einer Getränkefabrik ein Produktion zum Brauen von Bier folgende Schritte umfassen: Maischen, Abläutern, Kochen der Würze, Klären, Kühlen der Würze. Etliche dieser Schritte unterteilen sich in energieintensive Teilschritte wie Erhitzen auf eine bestimmte Temperatur, Zugabe von Malz, Wasser, Hopfen, Pumpen, Abpumpen, Kühlen etc. Etwa bei der Verwendung mehrerer Produktionsstrecken oder im Hinblick auf eine nachfolgende Abfüllung des Biers treten etliche deutliche verschiedene Verbrauchsprofile für Energie/Strom und beispielsweise Wasser auf. Die Optimierung der Schritte kann im Rahmen des hier vorgestellten erfindungsgemäßen Verfahrens geschehen.

Das Verfahren kann auch dann eingesetzt werden, wenn nur eine bestimmte Obergrenze für die Menge oder das Volumen eines Mediums nicht überschritten werden soll.

Dies könnte zum Beispiel dann eintreten, wenn Abfüll- und Verpackungstechnik und Prozesstechnik gleichzeitig das Medium benötigen würden, welches nur begrenzt zur Verfügung steht. Eine ähnliche Situation kann sich ergeben, wenn in einem Bereich mehrere Einheiten gleichzeitig das Medium benötigen würden, welches wiederum nur begrenzt zur Verfügung steht.

Bei Heizprozessen mit Dampf kann zum Beispiel bei gleichzeitiger Reinigung von mehreren Füllern und/oder beim Aufheizen von mehreren Behältern und Maschinen eine (vorgegebene) Maximalmenge an Energie überschritten werden.

In diesem Fall würde das Aufheizen unnötig lange dauern. Gleichzeitigkeiten könnten per Planung durch das Verfahren vermieden werden.

In einer Brauerei könnte das Timing für den Start oder Weiterleitung von Halbfertigerzeugnissen so geplant werden, dass der Medienhaushalt (hier z.B. auch Dampf in den unterschiedlichen Phasen des Brauprozesses) harmonischer gestaltet werden kann.

Innerhalb der Abfüll- und Verpackungstechnik könnte ebenso der Dampfhaushalt durch Planung derartig gestaltet sein, dass keine Bedarfsspitzen gleichzeitig auftreten. Beispielsweise könnte eine Produktionscharge aus diesem Grund mengentechnisch erweitert werden, so dass ein Reinigungsprozess erst später anfallen würde und nicht zeitgleich mit anderen Prozessen gleichzeitig stattfinden würde. Somit wären indirekt die Kosten pro produzierte Einheit ebenfalls geringer, als dass längere Nebenzeiten in Kauf genommen werden würden.

Das Verfahren könnte zusätzlich auch dazu führen, dass Medienerzeuger in einer Fabrik kleiner ausgelegt werden könnten.

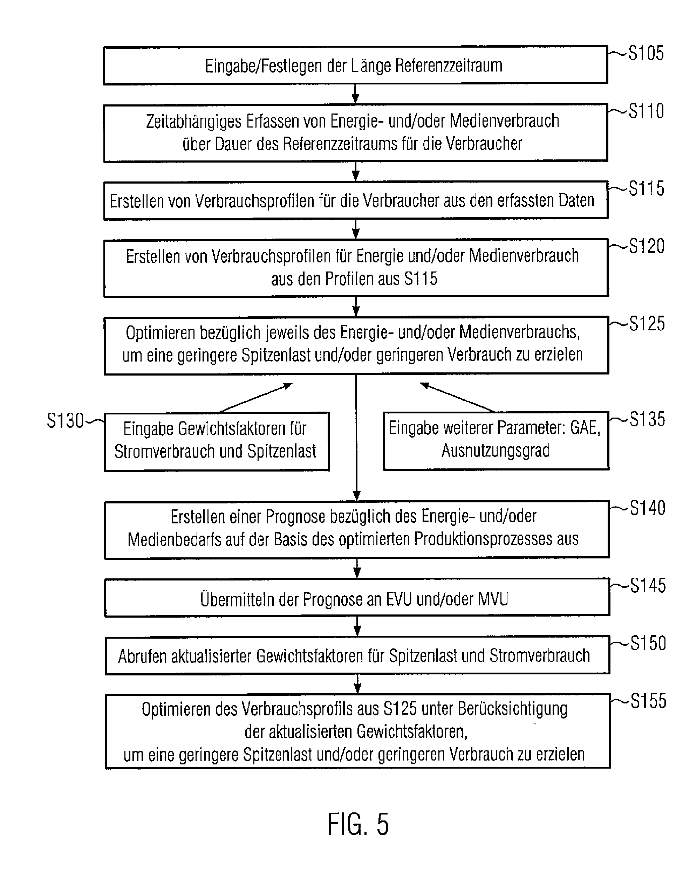

Die Figur 5 zeigt ein Verfahren zur Optimierung eines Produktionsprozesses mit mehreren Produktionsschritten, wobei der Prozess mehrere Verbraucher umfasst, zur Produktion eines Produkts in einer Produktionsanlage. In der Figur wird im Schritt S105 der Referenzzeitraum festgelegt und eingegeben. Dabei sollte die Zeitdauer und die Betriebssituation der Produktionsanlage berücksichtigt werden. Im Schritt S110 der Figur 5 erfolgt ein zeitabhängiges Erfassen von Energie- und/oder Medienverbrauch für die Verbraucher über einen vordefinierten Referenzzeitraum zur Erstellung von entsprechenden Verbrauchsprofilen jeweils für den Energie- und/oder Medienverbrauch der Verbraucher. Hier wird also für die Verbraucher der Energie- und/oder Medienverbrauch profiliert und damit ein erster Schritt hin zu einer Transparenz der Verbraucher unternommen. In Schritt S115 werden die zeitabhängigen Verbrauchsprofile für die betrachteten Verbraucher erstellt. Diese Profile können den Profilen ähneln, die in den Figuren 2A und 2B angedeutet sind.

In Schritt S120 erfolgt Erstellen eines zeitabhängigen Verbrauchsprofils des Energie- und/oder Medienverbrauchs über den vordefinierten Referenzzeitraum aus den Verbrauchsprofilen aus Schritt S115. Dabei kann eine gesamte zeitliche Abfolge der Prozessschritte sowie durch Aufsummieren der Profile ein Gesamtverbrauchsprofil erstellt werden. Es versteht sich, dass auch Teilprofile betrachtet werden können, d.h. Profile, für die nur ein Teil der Verbraucher betrachtet wird.

In Schritt S125 wird auf der Basis der Verbrauchsprofile aus Schritt S120 das Optimieren des Verbrauchsprofils/ der Verbrauchsprofile bezüglich jeweils des Energie- und/oder Medienverbrauchs begonnen. Dies geschieht im Hinblick auf eine verringerte Spitzenlast und/oder einen geringeren Verbrauchs. Die angestrebte Verringerung der Spitzenlast kann etwa mit dem Beispiel verglichen werden, das in Figur 4 dargestellt, wobei das in Figur 3 dargestellte Profil als Referenzwert dienen kann. Die Schritte S130 und S135 deuten an, dass beim Optimieren zusätzlich noch Parameter bezüglich der Energie- und/oder Medienpreise von einem Energieversorgungsunternehmen, EVU, und/oder einem Medienversorgungsunternehmen, MVU, abgerufen und eingebracht werden können; wobei die abgerufenen Energie- und/oder Medienpreise beim Optimieren des Energie- und Medienverbrauchs berücksichtigt werden, um Hochpreisphasen zu vermeiden. Dabei können insbesondere Preise für Spitzenlast einen anderen Gewichtsfaktor erhalten als Preise für Verbrauch. Ferner können, im Schritt S135, weitere Parameter in die Optimierung mit einfließen, etwa der Ausnutzungsgrad der Verbraucher und/oder die Gesamtanlageneffektivität, GAE.

Im Schritt S140 wird auf der Basis des optimierten Produktionsprozesses aus den Schritten S120 - S135 eine Verbrauchsprognose erstellt, die einen zukünftigen Bedarf an Energie und/oder Medien umfasst. Dabei kann beispielsweise über einen Zeitraum von einigen Tagen der Bedarf/Verbrauch prognostiziert werden. Im Schritt S145 wird der Bedarf an ein EVU und/oder MVU übermittelt. Auf der Basis der Prognose werden aktualisierte Parameter bezüglich der Energie- und/oder Medienpreise von einem Energieversorgungsunternehmen, EVU, und/oder einem Medienversorgungsunternehmen, MVU, abgerufen. Dabei können sich insbesondere die Gewichtsfaktoren für Spitzenlast und Stromverbrauch geändert haben. In Schritt S155 wird dann eine erneute Optimierung unter Berücksichtigung der aktualisierten Parameter durchgeführt. Dabei kann der Schritt S155 im Wesentlichen dem Schritt S120 gleichen. Es kann auch regelmäßig wieder zum Schritt S120 zurück gegangen werden, um regelmäßig oder auch nach Umstellungen jeweils aktualisierte und optimierte Schritte des Produktionsprozesses zu erhalten.

Es versteht sich, dass die in den zuvor beschriebenen Ausführungsbeispielen genannte Merkmale sich nicht auf die speziell in den Figuren gezeigten Kombinationen beschränken, sondern auch in beliebigen anderen Kombinationen möglich sein können.

## Patentansprüche

1. Verfahren zur Optimierung eines Produktionsprozesses mit mehreren Produktionsschritten, wobei der Prozess mehrere Verbraucher umfasst, zur Produktion eines Produkts in einer Produktionsanlage, insbesondere in einer Getränkefabrik, mit den Schritten:
(i) zeitabhängiges Erfassen von Energie- und/oder Medienverbrauch für die Verbraucher über einen vordefinierten Referenzzeitraum zur Erstellung von entsprechenden Verbrauchsprofilen jeweils für den Energie- und/oder Medienverbrauch der Verbraucher;
(ii) Erstellen eines zeitabhängigen Verbrauchsprofils des Energie- und/oder Medienverbrauchs über den vordefinierten Referenzzeitraum aus den Verbrauchsprofilen aus Schritt (i), insbesondere durch Aufsummieren der Profile; und
(iii) Optimieren des Verbrauchsprofils aus Schritt (ii) bezüglich jeweils des Energie - und/oder Medienverbrauchs im Hinblick auf eine verringerte Spitzenlast und/oder einen geringeren Verbrauchs.

2. Verfahren gemäß Anspruch 1, wobei das Optimieren das Ändern des Ablaufs der Produktionsschritte und/oder das Ändern des zeitlichen Versatzes der Schritte umfasst unter der Bedingung, dass die Produktion des Produkts gewährleistet bleibt.

3. Verfahren gemäß Anspruch 1 oder Anspruch 2, wobei das Optimieren den Ausnutzungsgrad der Verbraucher und/oder die Gesamtanlageneffektivität, GAE, berücksichtigt:

4. Verfahren gemäß wenigstens einem der Ansprüche 1 - 3, wobei das Optimieren zusätzlich das Abrufen von Energie- und/oder Medienpreisen von einem Energieversorgungsunternehmen, EVU, und/oder einem Medienversorgungsunternehmen, MVU, umfasst; wobei die abgerufenen Energie- und/oder Medienpreise beim Optimieren des Energie - und Medienverbrauchs berücksichtigt werden, um Hochpreisphasen zu vermeiden.

5. Verfahren gemäß wenigstens einem der Ansprüche 1 - 4, wobei die Verbrauchsprofile der Schritte (i) und (ii) zusätzlich in Abhängigkeit der Umgebungstemperatur und/oder des Umgebungsdrucks über den vordefinierten Referenzzeitraum betrachtet werden.

6. Verfahren gemäß wenigstens einem der Ansprüche 1 - 5, weiterhin umfassend:
(iv) Erstellen einer Prognose bezüglich des Energie- und/oder Medienbedarfs auf der Basis des optimierten Produktionsprozesses;
(v) Übermitteln der Prognose bezüglich des Energie- und/oder Medienbedarfs an die EVU und/oder MVU; und
(vi) Abrufen von aktualisierten Energie- und/oder Medienpreisen von dem EVU, und/oder dem MVU und erneutes Optimieren des Verbrauchsprofils unter Berücksichtigung der aktualisierten Energie- und/oder Medienpreise im Hinblick auf eine verringerte Spitzenlast und/oder einen geringeren Verbrauchs und im Hinblick auf eine Vermeidung von Hochpreisphasen.

7. Verfahren nach Anspruch 6, weiterhin das Bereitstellen der Funktionen für die Prognoseberechnung an die EVU und/oder die MVU umfassend.

8. Computerprogrammprodukt, umfassend wenigstens ein computerlesbares Medium mit durch einen Computer ausführbaren Anweisungen zum Durchführen der Schritte des Verfahrens nach wenigstens einem der Ansprüche 1 - 7 beim Betrieb auf einem Computer.

9. Vorrichtung zur Berechnung der Optimierung eines Produktionsprozesses mit mehreren Produktionsschritten, wobei der Prozess mehrere Verbraucher umfasst, zur Produktion eines Produkts in einer Produktionsanlage, insbesondere in einer Getränkefabrik,:
(i) Mittel zum zeitabhängigen Erfassen von Energie- und/oder Medienverbrauch für die Verbraucher über einen vordefinierten Referenzzeitraum zur Erstellung von entsprechenden Verbrauchsprofilen jeweils für den Energie- und/oder Medienverbrauch der Verbraucher;
(ii) Mittel zum Erstellen eines zeitabhängigen Verbrauchsprofils des Energie- und/oder Medienverbrauchs über den vordefinierten Referenzzeitraum aus den Verbrauchsprofilen aus Schritt (i), insbesondere durch Aufsummieren der Profile; und
(iii) eine Steuereinheit zum Optimieren des Verbrauchsprofils aus Schritt (ii) bezüglich jeweils des Energie- und/oder Medienverbrauchs im Hinblick auf eine verringerte Spitzenlast und/oder einen geringeren Verbrauchs.

10. Vorrichtung gemäß Anspruch 9, wobei das Optimieren das Ändern des Ablaufs der Produktionsschritte und/oder das Ändern des zeitlichen Versatzes der Schritte umfasst unter der Bedingung, dass die Produktion des Produkts gewährleistet bleibt.

11. Vorrichtung gemäß Anspruch 9 oder Anspruch 10, wobei das Optimieren den Ausnutzungsgrad der Verbraucher und/oder die Gesamtanlageneffektivität, GAE, berücksichtigt:

12. Vorrichtung gemäß wenigstens einem der Ansprüche 9 -11, wobei die Steuereinheit mit einem Energieversorgungsunternehmen, EVU, und/oder einem Medienversorgungsunternehmen, MVU, vernetzt ist, wobei die Steuereinheit ausgebildet ist, Energie- und/oder Medienpreisen von dem EVU und/oder MVU abzurufen; und wobei die abgerufenen Energie- und/oder Medienpreise beim Optimieren des Energie- und Medienverbrauchs berücksichtigt werden, um Hochpreisphasen zu vermeiden.

13. Vorrichtung gemäß wenigstens einem der Ansprüche 9 -12, wobei die Verbrauchsprofile der Schritte (i) und (ii) zusätzlich in Abhängigkeit der Umgebungstemperatur und/oder des Umgebungsdrucks über den vordefinierten Referenzzeitraum betrachtet werden.

14. Vorrichtung gemäß wenigstens einem der Ansprüche 9 - 13, wobei die Steuereinheit weiterhin ausgebildet ist:
(iv) eine Prognose für einen vordefinierten Zeitraum bezüglich des Energie- und/oder Medienbedarfs auf der Basis des optimierten Produktionsprozesses zu erstellen;
(v) die Prognose bezüglich des Energie- und/oder Medienbedarfs an die EVU und/oder MVU zu übermitteln; und
(vi) aktualisierte Energie- und/oder Medienpreise vom EVU, und/oder vom MVU abzurufen und zum erneuten Optimieren des Verbrauchsprofils zu verwenden unter Berücksichtigung der aktualisierten Energie- und/oder Medienpreise im Hinblick auf eine verringerte Spitzenlast und/oder einen geringeren Verbrauchs und im Hinblick auf eine Vermeidung von Hochpreisphasen.

15. Vorrichtung nach Anspruch 14, wobei die Steuereinheit ausgebildet ist, die Funktionen für die Prognoseberechnung an die EVU und/oder die MVU bereitzustellen.
